(19) Europäisches Patentamt
European Patent Office
Office européen des brevets

(11) **EP 2 123 518 B1**

(12) **FASCICULE DE BREVET EUROPEEN**

(45) Date de publication et mention
de la délivrance du brevet:
**18.08.2010 Bulletin 2010/33**

(51) Int Cl.:
***B60R 16/027*** *(2006.01)*

(21) Numéro de dépôt: **08360012.2**

(22) Date de dépôt: **16.05.2008**

(54) **Contact tournant dont le câble est revêtu d'une bande adhésive**

Drehkontakt, dessen Kabel mit einem Klebeband versehen ist

Rotating ignition switch in which the cable is covered with an adhesive strip

(84) Etats contractants désignés:
**AT BE BG CH CY CZ DE DK EE ES FI FR GB GR
HR HU IE IS IT LI LT LU LV MC MT NL NO PL PT
RO SE SI SK TR**

(43) Date de publication de la demande:
**25.11.2009 Bulletin 2009/48**

(73) Titulaire: **Delphi Technologies, Inc.
Troy, Michigan 48007 (US)**

(72) Inventeurs:
• **La Paglia, Anthony
67400 Illkirch (FR)**
• **Gaggio, Jean-Michel
67400 Illkirch (FR)**

(74) Mandataire: **Robert, Vincent et al
Delphi France SAS
64, avenue de la Plaine de France
Zac Paris Nord 2
BP 65059
95972 Tremblay-en-France (FR)**

(56) Documents cités:
**WO-A-99/29004 GB-A- 2 400 504**

**Description**

La présente invention concerne un contact tournant destiné à assurer la liaison électrique entre deux corps respectivement fixe et mobile animés d'un mouvement relatif de rotation autour d'un même axe.

De tels dispositifs sont notamment employés dans l'industrie automobile, dans les colonnes de direction des véhicules, pour permettre la connexion électrique entre des éléments situés dans le volant, et par conséquent mobiles en rotation, et un circuit fixe câblé dans l'habitacle du véhicule.

Ces contacts tournants comportent à titre essentiel un rotor et un stator, lesquels définissent entre eux un espace d'allure annulaire présentant deux parois en regard, qui peuvent être issues respectivement du rotor et du stator.

Un ou plusieurs câbles plats sont disposés entre ces parois, et reliés à leurs extrémités à des connecteurs fixés aux parois.

Dans l'hypothèse de l'invention, chaque câble comprend un premier tronçon s'enroulant au contact d'une des parois, puis une boucle d'inversion et un second tronçon s'enroulant au contact de l'autre paroi. Il s'agit par conséquent de contacts tournants utilisant des câbles courts.

Plus précisément encore, les contacts tournants concernés par l'invention n'utilisent pas de mécanisme additionnels, par exemple à roues dentées censés améliorer et favoriser le contrôle du mouvement du câble notamment au niveau de la boucle.

Le contrôle de ce mouvement est cependant au coeur du problème résolu par l'invention.

Dans les hypothèses sans mécanisme additionnel, on dispose une certaine quantité de graisse sur une face de chaque câble plat, pour garantir à la fois une adhérence légère en sorties de la boucle, et le glissement continu de l'ensemble lorsque le contact tournant est mis en oeuvre. La graisse garantit la continuité fluide du double mouvement qui s'applique au câble plat, c'est-à-dire d'une part le défilement du câble au contact des deux parois, et d'autre part la progression de la boucle à l'intérieur du logement annulaire.

L'application de graisse sur la surface extérieure des câbles permet d'une part d'assurer le glissement, et occasionne d'autre part une sorte de micro-adhésion empêchant des glissements intempestifs susceptibles de provoquer un décalage et/ou une détente du câble nuisible au contrôle de sa trajectoire et provoquant des bruits dans le système.

Dans ces configurations, l'application de la graisse n'est cependant pas aisée, et en tout état de cause pas pratique à mettre en oeuvre dans le cadre d'un procédé de production. La fabrication est d'ailleurs onéreuse du fait des difficultés rencontrées pour l'application de la graisse sur le câble, et l'intégration des câbles graissés dans le boîtier du conducteur.

Le document GB 2400504 A divulgue le préambule de la revendication 1.

Le but de l'invention est de remédier à ces inconvénients, et de proposer une solution permettant de faciliter l'assemblage des différents composants du contact tournant, conduisant de surcroît à des incidences économiques favorables.

A cet effet, selon l'objet de la revendication 1, la face de chaque câble plat destinée a s'enrouler au contact des parois est recouverte d'une bande dont le côté extérieur est revêtu au moins partiellement d'une matière tendre ayant un pouvoir adhésif inférieur à 3N/100mm.

En fait, la matière tendre en question remplace la graisse, c'est-à-dire qu'elle est supposée avoir un comportement similaire, pour permettre d'une part le glissement correct de la bande, et d'autre part la légère adhérence contre les parois intérieure et extérieure assurant la maîtrise fluide du mouvement.

Selon une possibilité, cette matière peut être un composé basé sur du silicone. Une telle matière, assure une forme d'adhérence par aspiration plutôt que par collage, un peu à la manière d'une ventouse.

Alternativement, cette matière peut être une colle acrylique. Dans ce cas, comme on l'a indiqué, le pouvoir adhésif de cette colle doit être léger, de manière à réaliser également un effet du type ventouse, avec un décollage des parois facile sous l'effet du glissement du câble.

De préférence, ledit pouvoir adhésif peut être compris entre 2N/100mm et 3N/100mm.

Pour maintenir ce pouvoir adhésif suffisamment faible, en utilisant les matières adhésives existantes, une solution additionnelle utilisée dans le cadre de l'invention est de maintenir la largeur de la bande inférieure à celle du câble plat. Dans ce cas-là, outre le choix d'une matière à pouvoir adhésif léger, seule une partie de la surface est concernée par la mise en oeuvre de cette matière, ce qui aboutit à réduire encore le pouvoir adhésif du revêtement. La diminution de la surface de contact donne d'ailleurs de bons résultats pour ce qui concerne l'objectif général de réduire le pouvoir adhésif du câble sur un côté.

Alternativement, la bande peut être disposée en chevrons successifs. Dans cette seconde hypothèse, la surface de matière adhésives est aussi inférieure à la surface du câble plat, et son effet, ramené à la surface dudit câble, est par conséquent également atténué.

Dans les deux cas, selon une possibilité, la surface de la bande peut être prévue sensiblement égale à la moitié de la surface de la face du câble qu'elle recouvre.

Par ailleurs, le côté intérieur de la bande est revêtu d'une matière adhésive en vue de son collage contre le câble plat. Cette matière adhésive peut par exemple être aussi une colle acrylique, dont le pouvoir adhésif est cependant beaucoup moins critique que sur l'autre face.

En tout état de cause, quelle que soit la matière adhésive utilisée, son pouvoir adhésif est choisi supérieur à 20 N/100mm. Cette valeur résulte de tests, qui établissent clairement qu'elle est suffisante.

L'invention concerne également une bande destinée à être fixée sur une des faces d'un câble plat de contact tournant tel que décrit auparavant. Selon une caractéristique essentielle, cette bande est disposée en rouleau, les deux côtés de ladite bande étant alors revêtus d'une couche de protection pelable.

Cette solution présente des avantages non négligeables en termes de procédés de fabrication, puisqu'il suffit de coller une telle bande sur un câble plat avant de le disposer à l'intérieur du logement annulaire.

L'invention va à présent être décrite plus en détail, en référence aux figures, pour lesquelles :

- la figure 1 représente, en perspective, un rouleau d'une bande selon l'invention ;
- la figure 2 est une vue en élévation d'un câble plat utilisable dans un contact tournant selon l'invention ; et
- la figure 3 est une vue en perspective d'un tel contact tournant muni de quatre câbles courts à boucles d'inversion de la trajectoire.

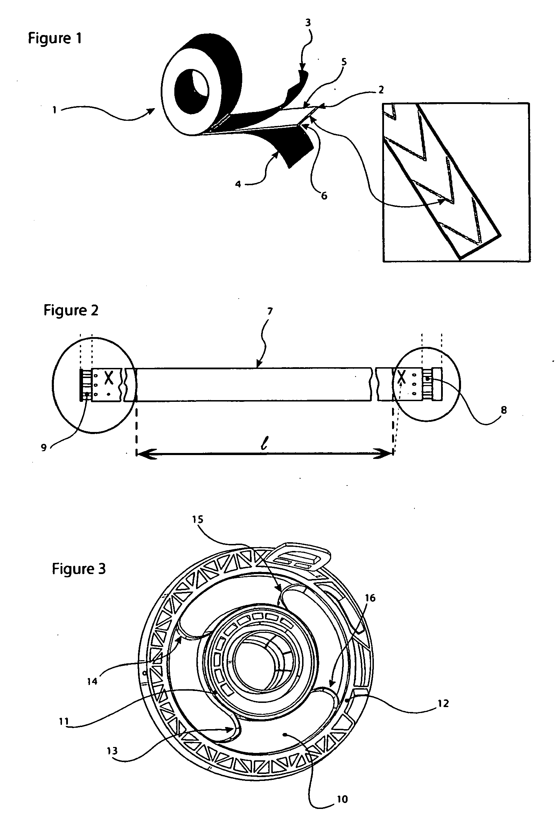

En référence à la figure 1, le rouleau (1) est composé d'une bande (2) enroulée. Cette bande (2) est recouverte, sur ses deux faces, de revêtements protecteurs (3, 4) pelables. D'un côté, c'est-à-dire sur une face (5) de la bande (2), le revêtement (3) recouvre de la colle à fort pouvoir adhésif, permettant le collage de la bande (2) sur un câble plat.

Ladite bande (2) est par ailleurs recouverte, sur le côté opposé, d'un matériau tendre (6), soit une colle à faible pouvoir adhésif, soit un matériau synthétique possédant également une aptitude limitée à l'adhésion, par exemple par aspiration.

Lors du montage du contact tournant, comme par exemple celui qui apparaît en figure 3, les câbles plats (7), dont une configuration possible est illustrée en figure 2, sont munis, sur leur face destinée à entrer en contact avec les parois du logement annulaire, d'une bande (2) telle que décrite en figure 1.

Les câbles plats (7) comportent, à leurs deux extrémités, des moyens de connexion (8, 9) à des connecteurs situés dans le logement annulaire, respectivement sur le rotor et sur le stator. Le câble plat (7) est revêtu, sur une distance l couvrant la quasi totalité de sa longueur totale, jusqu'au voisinage des extrémités de connexion, de la bande (2) apparaissant en figure 1.

La figure 3 montre un contact tournant muni de quatre câbles plats (7), décalés d'environ $\frac{\pi}{2}$ rds, chacun ayant une portion partiellement enroulée contre la paroi interne (11) du logement annulaire (10), et une portion enroulée autour de sa paroi externe (12). La paroi interne (11) peut selon le cas appartenir au rotor, alors que la paroi externe (12) appartient au stator. Entre ces portions enroulées, chaque câble plat (7) comporte une boucle (13, 14, 15, 16) d'inversion de trajectoire. Au lieu de disposer de la graisse sur les câbles plats (7), ce qui rend le procédé de fabrication compliqué et dès lors onéreux, ces câbles (7) sont simplement revêtus d'une bande (2) telle que montrée en figure 1, dont la face (5) est collée contre le câble plat (7), et la face (6) est revêtue d'un matériau présentant des propriétés le rendant apte à remplacer la graisse.

L'exemple illustré par les figures n'est bien entendu pas exhaustif de l'invention, qui englobe notamment des variantes de matière et de forme. Ainsi, le revêtement (6) peut soit couvrir la totalité de la surface de la bande (2), dans l'hypothèse où le matériau choisi a un pouvoir adhésif suffisamment faible, soit ne couvrir qu'une portion de la surface de la face concernée de la bande (2), ce qui conduit à diminuer l'adhérence globale de la bande (2).

C'est ce qui est montré en référence à la figure 1, dans l'encadré constituant un agrandissement de la face de la bande (2) à faible pouvoir adhésif, le matériau (6) choisi étant distribué sur ladite face sous forme de chevrons et n'occupant ainsi qu'une fraction limitée de la surface.

**Revendications**

1. Contact tournant comportant un rotor et un stator définissant entre eux un espace d'allure annulaire présentant deux parois (11, 12) en regard entre lesquelles est disposé au moins un câble plat (7) dont les extrémités sont reliées à des connecteurs fixés auxdites parois (11, 12), chaque câble (7) comprenant un premier tronçon s'enroulant au contact d'une des parois (11), une boucle d'inversion (13, 14, 15, 16) et un second tronçon s'enroulant au contact de l'autre paroi (12), la face du câble plat (7) destinée à s'enrouler au contact des parois (11, 12) étant recouverte d'une bande (2) dont le côté extérieur est revêtu au moins partiellement d'une matière tendre (6), **caractérisé en ce que** la matière tendre a un pouvoir adhésif inférieur à 3N/100mm.

2. Contact tournant selon la revendication précédente, **caractérisé en ce que** ladite matière (6) est un composé basé sur du silicone.

3. Contact tournant selon la revendication 1, **caractérisé en ce que** ladite matière (6) est une colle acrylique.

4. Contact tournant selon la revendication précédente, **caractérisé en ce que** la colle acrylique a un pouvoir adhésif compris entre 2N/100mm et 3N/100mm.

5. Contact tournant selon l'une quelconque des reven-

# EP 2 123 518 B1

dications précédentes, **caractérisé en ce que** la bande (2) ou la matière adhésive (6) a une largeur inférieure à celle du câble plat (7).

6. Contact tournant selon l'une quelconque des revendications 1 à 4, **caractérisé en ce que** la bande (2) ou la matière adhésive (6) est conformée en chevrons successifs.

7. Contact tournant selon l'une des revendications 5 et 6, **caractérisé en ce que** la surface de la bande (2) est sensiblement égale à la moitié de la surface de la face du câble (7) qu'elle recouvre.

8. Contact tournant selon l'une quelconque des revendications précédentes, **caractérisé en ce que** le côté intérieur (5) de la bande (2) est revêtu d'une matière adhésive en vue de son collage contre le câble plat (7).

9. Contact tournant selon la revendication précédente, **caractérisé en ce que** ladite matière adhésive est une colle acrylique.

10. Contact tournant selon l'une quelconque des revendications 8 et 9, **caractérisé en ce que** le pouvoir adhésif de ladite matière adhésive est supérieur à 20 N/100mm.

11. Bande (2) destinée à être fixée sur l'une des faces d'un câble plat (7) de contact tournant selon les revendications précédentes, **caractérisée en ce qu'**elle est disposée en rouleau, les deux côtés de ladite bande (2) étant revêtus d'une couche de protection (3, 4) pelable.

**Claims**

1. Rotating contact including a rotor and a stator defining between them a space of annular configuration presenting two facing walls (11, 12) between which is arranged at least one flat cable (7) the ends of which are joined to connectors fixed to the said walls (11, 12), each cable (7) comprising a first section curling in contact with one of the walls (11), an inversion loop (13, 14, 15, 16) and a second section curling in contact with the other wall (12), the face of the flat cable (7) intended to be curled in contact with the walls (11, 12) being covered by a strip (2) the outer side of which is at least partially coated with a soft material (6),
**characterised by** the fact that the soft material has an adhesive power less than 3N/100mm.

2. Rotating contact as described in the preceding claim, **characterised by** the fact that the said material (6) is a silicone based compound.

3. Rotating contact as described in claim 1, **characterised by** the fact that the said material (6) is an acrylic adhesive.

4. Rotating contact as described in the preceding claim, **characterised by** the fact that the acrylic adhesive has an adhesive power of between 2N/100mm and 3N/100mm.

5. Rotating contact as described in any one of the preceding claims, **characterised by** the fact that the strip (2) or the adhesive material (6) has a width lesser than that of the flat cable (7).

6. Rotating contact as described in any one of claims 1 to 4, **characterised by** the fact that the strip (2) or the adhesive material (6) is formed into successive chevrons.

7. Rotating contact as described in one of claims 5 and 6, **characterised by** the fact that the area of the strip (2) is substantially equal to half the area of the face of the cable (7) which it covers.

8. Rotating contact as described in any one of the preceding claims, **characterised by** the fact that the inner side (5) of the strip (2) is coated with an adhesive material so that it sticks against the flat cable (7).

9. Rotating contact as described in the preceding claim, **characterised by** the fact that the said adhesive material is an acrylic adhesive.

10. Rotating contact as described in any one of claims 8 and 9, **characterised by** the fact that the adhesive power of the said adhesive material is greater than 20 N/100mm.

11. Strip (2) intended to be fixed onto one of the faces of a rotary contact flat cable (7) as described in the preceding claims, **characterised by** the fact that it is arranged in a roll, the two sides of the said strip (2) being coated with a peelable protective layer (3, 4).

**Patentansprüche**

1. Drehkontakt, umfassend einen Läufer und einen Ständer, die miteinander einen Raum von ringförmigem Verlauf begrenzen, der zwei einander gegenüber stehende Wände (11, 12) aufweist, zwischen denen mindestens ein Flachkabel (7) angeordnet ist, dessen Enden mit an den Wänden (11, 12) befestigten Verbindern verbunden sind, wobei jedes Kabel (7) einen ersten Abschnitt, der sich in Kontakt mit einer der Wände (11) aufrollt, eine Umkehrschleife (13, 14, 15, 16) und einen zweiten Abschnitt auf-

4

weist, der sich in Kontakt mit der anderen Wand (12) aufrollt, wobei die Seite des Flachkabels (7), die dazu bestimmt ist, sich in Kontakt mit den Wänden (11, 12) aufzurollen, mit einem Band (2) bedeckt ist, dessen Außenseite mindestens teilweise mit einem weichen Werkstoff (6) beschichtet ist,
**dadurch gekennzeichnet, dass** der weiche Werkstoff ein Haftvermögen von weniger als 3N/100mm besitzt.

2. Drehkontakt nach dem vorhergehenden Anspruch, **dadurch gekennzeichnet, dass** der Werkstoff (6) eine Verbindung auf Siliconbasis ist.

3. Drehkontakt nach Anspruch 1, **dadurch gekennzeichnet, dass** der Werkstoff (6) ein Acrylkleber ist.

4. Drehkontakt nach dem vorhergehenden Anspruch, **dadurch gekennzeichnet, dass** der Acrylkleber ein Haftvermögen zwischen 2N/100mm und 3N/100mm besitzt.

5. Drehkontakt nach einem der vorhergehenden Ansprüche, **dadurch gekennzeichnet, dass** das Band (2) oder der Klebstoff (6) eine Breite besitzt, die kleiner als die des Flachkabels (7) ist.

6. Drehkontakt nach einem der Ansprüche 1 bis 4, **dadurch gekennzeichnet, dass** das Band (2) oder der Klebstoff (6) in aufeinanderfolgenden Sparren ausgebildet ist.

7. Drehkontakt nach einem der Ansprüche 5 und 6, **dadurch gekennzeichnet, dass** die Oberfläche des Bands (2) im Wesentlichen gleich der Hälfte der Oberfläche der Seite des Kabels (7) ist, die es bedeckt.

8. Drehkontakt nach einem der vorhergehenden Ansprüche, **dadurch gekennzeichnet, dass** die Innenseite (5) des Bands (2) zum Zweck seiner Verklebung mit dem Flachkabel (7) mit einem Klebstoff beschichtet ist.

9. Drehkontakt nach dem vorhergehenden Anspruch, **dadurch gekennzeichnet, dass** der Klebstoff ein Acrylkleber ist.

10. Drehkontakt nach einem der Ansprüche 8 und 9, **dadurch gekennzeichnet, dass** das Haftvermögen des Klebstoffs größer als 20N/100mm ist.

11. Band, das dazu bestimmt ist, an einer der Seiten eines Flachkabels (7) eines Drehkontakts nach den vorhergehenden Ansprüchen befestigt zu werden, **dadurch gekennzeichnet, dass** es als Rolle angeordnet ist, wobei die beiden Seiten des Bands (2) mit einer abziehbaren Schutzschicht (3,4) bedeckt

sind.

Figure 1

Figure 2

Figure 3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- GB 2400504 A